# EUROPÄISCHE PATENTSCHRIFT

(11) **EP 2 551 969 B1**
(45) Veröffentlichungstag und Bekanntmachung des Hinweises auf die Patenterteilung: **05.08.2015**
(21) Anmeldenummer: 12172113.8
(22) Anmeldetag: 15.06.2012
(51) Int. Cl.: H01R 25/16, H02G 3/08

(54) **Verteilerbox für elektrische Leitungen und elektrisches Verteilersystem mit derartigen Verteilerboxen**
Junction box for electric cables and electric distributor system with such Junction boxes
Boîte de jonction pour conduites électriques et système de répartition électrique avec des boîtes de jonction de ce type

(30) Priorität: 27.07.2011 DE 202011050826 U
(43) Veröffentlichungstag der Anmeldung: 30.01.2013
(73) Patentinhaber: Adels-contact Elektrotechnische Fabrik GmbH & Co. KG, 51469 Bergisch-Gladbach (DE)
(72) Erfinder: Reisen, Willy, 41379 Brüggen (DE); Reisen, Benjamin, 41061 Mönchengladbach (DE); Berster, Wolfgang, 51766 Engelskirchen (DE); Henseler, Daniel, 53639 Königswinter (DE)
(74) Vertreter: Patentanwälte Dr. Solf & Zapf

(56) Entgegenhaltungen:
- EP-A2- 1 355 398
- DE-A1-102008 022 055
- DE-C- 722 208
- GB-A- 432 237

## Beschreibung

Die vorliegende Erfindung betrifft eine Verteilerbox für elektrische Leitungen, mit einem aus einem Isolationsstoff bestehenden Gehäuse, welches eingangs- und ausgangsseitig Durchführungsöffnungen für die elektrischen Leitungen aufweist, umfassend zwei miteinander verbindbare Gehäuseteile, und zwar ein Bodenteil und ein Deckelteil, und mit einem im Gehäuse angeordneten, elektrisch leitenden Kontaktkörper mit Anschlussstellen für die Leiter der elektrischen Leitungen, wobei die Durchführungsöffnungen in zumindest einem der Gehäuseteile angeordnet sind und als jeweils durch das andere Gehäuseteil verschließbare randoffene Ausnehmungen der Wandung des Gehäuseteils ausgeführt sind.

Verteilerboxen - auch Verzweiger oder Verteilerblöcke genannt - der genannten Art werden bei der Elektroinstallation immer dort eingesetzt, wo ein elektrisches Potential an mehrere Stellen weitergeleitet werden soll. Hierbei kann es sich um so genannte Multi-Serien-Verzweiger handeln, wobei man im Falle des Anschlusses von drei elektrischen Leitungen an eine Box von so genannten Y-Verbindern oder Y-Verzweigern spricht. Zum Verbinden und Verzweigen der elektrischen Leitungen sind im Stand der Technik u. a. Sternverteiler und Verteilerblöcke mit mehreren fest konfigurierten Steckplätzen bekannt. Da bei diesen Vorrichtungen alle Leitungen zu einem zentralen Punkt geführt werden, sind nachteiligerweise für die an die Verteilerboxen anzuschließenden Leitungen große Längen erforderlich.

Eine Verteilerbox ist z. B. aus der deutschen Gebrauchsmusterschrift DE 20 2011 000 244 U1 bekannt. Der dort beschriebene Verteilerblock weist eingangsseitig auf einer Anschlussseite eine erste und eine zweite Anschlussstelle auf, die jeweils als Durchführungsöffnungen in einem Gehäuse den lösbaren Anschluss eines elektrischen Leiters erlauben und in zwei Ebenen übereinander liegen. Das Gebrauchsmuster bezieht sich dabei insbesondere auf eine spezielle Gestaltung der Anschlüsse, wobei im Inneren des aus einem Gehäuseunterteil und einem Gehäuseoberteil bestehenden Gehäuses als Kontaktkörper ein Klemmkörper sowie dazu ein bewegliches Fixierteil vorgesehen sind. Über den Klemmkörper können die erste und zweite Anschlussstelle im Verteilerblock elektrisch leitend verbunden sein. Ausgangsseitig weist der Verteilerblock ebenfalls Durchführungsöffnungen im Gehäuse auf, wobei dort mit Hilfe von Klemmschrauben elektrische Leiter angeschlossen werden können, die zu anderen elektrischen Geräten oder Einheiten führen. Der bekannte Verteilerblock ist sehr voluminös und weist ein Bodenprofil zum lösbaren Verbinden mit einem Montageelement auf. Die Montage mit Hilfe der Klemmschrauben ist relativ aufwändig und erfordert neben den Durchführungsöffnungen für die Leiter weitere Gehäusedurchbrüche. Eine hohe Dichtheit bzw. ein hoher Schutzgrad können daher nicht erzielt werden.

Weiterhin ist eine Verteilerbox der eingangs genannten Art aus der EP 1 355 398 A2 bekannt, wobei das aus einem Isolationsstoff bestehende Gehäuse für den Anschluss von mehreren Kabeln geeignet ist. Hierbei muss zum Anschluss eines Kabels in dem Gehäuse stets das Deckelteil vom Bodenteil weggeklappt werden. Hierbei werden alle in dem Gehäuse anschließbaren Kabel freigegeben, wodurch Verunreinigungen in den gesamten Gehäuse-Innenraum gelangen können.

Der vorliegenden Erfindung liegt die Aufgabe zugrunde, eine Verteilerbox der eingangs genannten Art zu schaffen, die es mit geringem Herstellungs- und Montageaufwand gestattet, ein ortsunabhängiges elektrisches Kontaktsystem zur Konfiguration eines variablen Strompfades, vorzugsweise für in Reihe geschaltete stromführende Schaltungsanwendungen, aufzubauen. Dabei sollen die vorstehend genannten Nachteile überwunden werden.

Erfindungsgemäß wird diese Aufgabe dadurch gelöst, dass das Deckelteil aus miteinander verbundenen Segmenten besteht, mittels derer die randoffenen Ausnehmungen im Bodenteil separat verschließbar sind, wobei die Segmente des Deckelteils über Filmscharniere miteinander verbunden sind, wobei das Deckelteil vorzugsweise einstückig ausgebildet ist.

Das Deckelteil ist.dadurch vorteilhafterweise am Bodenteil unverlierbar gehalten und kann zusammen mit diesem als ein einziges Gehäusebauteil hergestellt werden. Außerdem erhöht sich gegenüber einer zweiteiligen Ausführung, die ebenfalls möglich ist, ohne weitere Maßnahmen die Dichtheit des Gehäuses im Bereich des Filmscharniers.

Mit der erfindungsgemäßen Verteilerbox gelingt es auf einfache Weise und unter Verwendung von im Vergleich mit den bekannten Vorrichtungen zur Leitungsverzweigung kürzeren Leitungen elektrische Schaltungen durch Ketten- und/oder Netzwerkbildung flexibel und ortsunabhängig zu konfigurieren, wobei in einem solchermaßen herstellbaren erfindungsgemäßen elektrischen Verteilersystem mindestens zwei erfindungsgemäße Verteilerboxen untereinander durch mindestens eine elektrische Leitung verbunden sind.

Hierzu kann in bevorzugter Ausbildung in den Verteilerboxen vorgesehen sein, dass der elektrisch leitende Kontaktkörper mehrteilig ausgebildet ist, wobei elektrische Brückenelemente, wie Um- oder Drehschalter, umlegbare Kontaktlaschen, Jumper, diesem Aspekt vorteilhafte Möglichkeit besteht auch darin, die Anschlussstellen des Kontaktkörpers als schraubenlose Systeme, wie Klemm-, Schneid-, oder Steckkontaktsysteme, auszubilden, mittels derer die Leiter der anzuschließenden elektrischen Leitungen durch Eindrücken automatisch kontaktiert und die Leitungen vorzugsweise vorher durchtrennt werden.

Mit Vorteil können dabei die erfindungsgemäße elektrische Verteilerbox bzw. das erfindungsgemäße Verteilersystem als Bestandteile von Leuchten oder Betriebsgeräteboxen bzw. deren jeweiligen Schnittstellen zum Einsatz kommen. So kann die erfindungsgemäße elektrische Verteilerbox mit Vorteil beispielsweise als konfigurierbare Anschlussklemme zum Anschluss eines oder mehrerer Verbraucher, insbesondere von mehreren in Reihe geschalteten, Konstantstrom benötigenden High-Power-LEDs, eingesetzt werden, wobei die Verteilerbox die elektrischen Verbindungen zwischen einer Zuleitung, dem Verbraucher und einer weiterführenden elektrischen Leitung bzw. einer vorgeschalteten Elektronik herstellt. Die Anschlussstellen können dabei derart geschaltet sein, dass jedes Leuchtmittel mit weiteren Leuchtmitteln desselben Stromkreises in Reihe geschaltet ist, wobei aber bedarfsweise auch Gruppen- oder Parallelschaltungen konfigurierbar sind.

Weitere vorteilhafte Ausgestaltungsmerkmale der Erfindung sind in den Unteransprüchen sowie der folgenden Beschreibung enthalten.

Anhand mehrerer in der Zeichnung dargestellter, bevorzugter Ausführungsbeispiele soll im Folgenden die Erfindung näher erläutert werden. Dabei zeigen:
- Fig. 1: eine perspektivische Darstellung einer ersten Ausführung einer erfindungsgemäßen elektrischen Verteilerbox in einer Ansicht von oben,
- Fig. 2: eine perspektivische Darstellung der ersten Ausführung einer erfindungsgemäßen elektrischen Verteilerbox in einer Ansicht von unten,
- Fig. 3: eine perspektivische Darstellung einer ersten Ausführung eines erfindungsgemäßen elektrischen Verteilersystems,
- Fig. 4: eine gegenüber Fig. 1 und 2 vergrößerte perspektivische Darstellung der ersten Ausführung einer erfindungsgemäßen elektrischen Verteilerbox mit Leitungsanschlüssen zum Aufbau eines erfindungsgemäßen elektrischen Verteilersystems gemäß Fig. 3,
- Fig. 5: in einem Maßstab wie in Fig. 4 eine perspektivische Darstellung einer zweiten Ausführung einer erfindungsgemäßen elektrischen Verteilerbox,
- Fig. 6: in einer Darstellung wie in Fig. 5 eine dritte Ausführung einer erfindungsgemäßen elektrischen Verteilerbox.

In den verschiedenen Figuren der Zeichnung sind gleiche Teile stets mit denselben Bezugszeichen versehen, so dass sie in der Regel auch jeweils nur einmal beschrieben werden. Dabei wird zu der anschließenden Beschreibung ausdrücklich betont, dass die Erfindung nicht auf die Ausführungsbeispiele und dabei auch nicht auf alle oder mehrere Merkmale von beschriebenen Merkmalskombinationen beschränkt ist, vielmehr kann jedes einzelne Teilmerkmal jedes Ausführungsbeispiels auch losgelöst von allen anderen im Zusammenhang damit beschriebenen Teilmerkmalen für sich eine erfinderische Bedeutung haben.

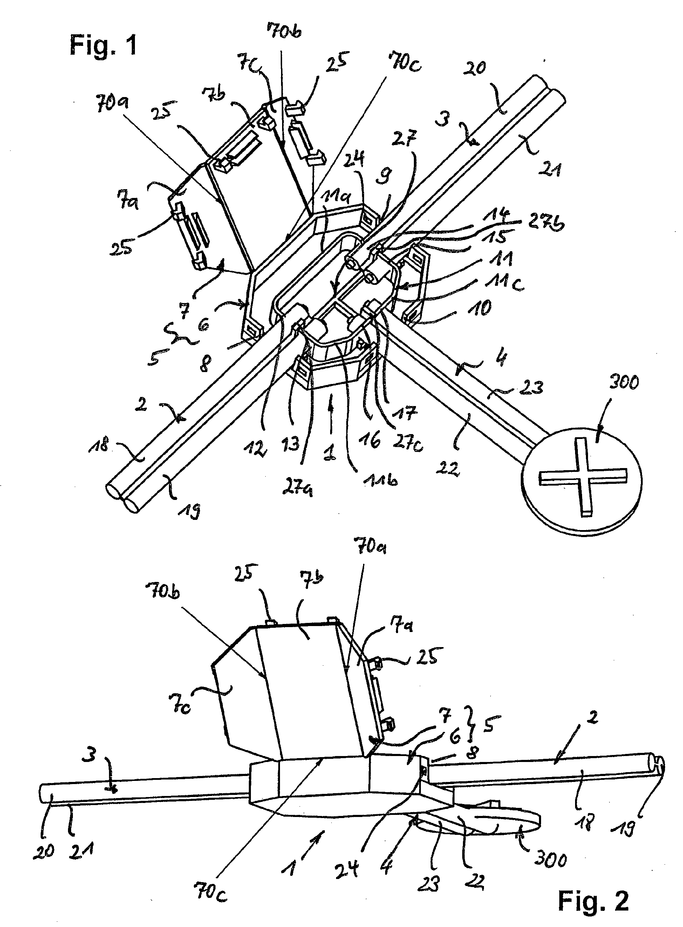

Wie zunächst Fig. 1 und 2 veranschaulichen, weist eine erfindungsgemäße Verteilerbox 1 für elektrische Leitungen 2, 3, 4 ein aus einem Isolationsstoff bestehendes Gehäuse 5 auf. Dieses Gehäuse 5 umfasst zwei miteinander verbindbare Gehäuseteile 6, 7 und zwar ein Bodenteil 6 und ein Deckelteil 7. Das Gehäuse 5 weist für die elektrischen Leitungen 2, 3, 4 Durchführungsöffnungen 8, 9, 10 auf. Im Gehäuse 5 ist ein elektrisch leitender Kontaktkörper 11 mit Anschlussstellen 12, 13, 14, 15, 16, 17 für die Leiter 18, 19, 20, 21, 22, 23 der zu verbindenden elektrischen Leitungen 2, 3, 4 angeordnet.

Das Gehäuse 5 weist eine parallelepipedrische Grundgestalt, vorzugsweise eine quaderförmige Grundgestalt, auf und besitzt abgeschrägte Eckbereiche. Im Gehäuse 5 sind entsprechend der Zahl der anzuschließenden elektrischen Leitungen 2, 3, 4 drei Durchführungsöffnungen 8, 9, 10 vorgesehen. Bei der erfindungsgemäßen Verteilerbox 1 handelt es sich folglich um einen Y-Verbinder oder Y-Verzweiger.

Im Gehäuse 5 ist jeweils eine Durchführungsöffnung 8 an einer Stirnseite, eine weitere Durchführungsöffnung 9 an der gegenüberliegenden Stirnseite und eine dritte Durchführungsöffnung 10 an einer Längsseite des Bodenteils 6 angeordnet.

Alle Durchführungsöffnungen 8, 9, 10 befinden sich im Bodenteil 6 des Gehäuses 7. Sie sind als durch das Deckelteil 7 verschließbare randoffene Ausnehmungen der Wandung des Bodenteils 6 ausgeführt, wobei das Deckelteil 7 aus miteinander verbundenen Segmenten 7a, 7b, 7c besteht und jede Ausnehmung durch ein ihr zugeordnetes Segment 7a, 7b, 7c des Deckelteils 7 separat verschließbar ist.

Die Segmente 7a, 7b, 7c des Deckelteils 7 sind über Filmscharniere 70a, 70b miteinander verbunden, wodurch das Deckelteil 7 vorzugsweise einstückig ausgebildet ist. Das Deckelteil 7 ist über ein weiteres Filmscharnier 70c - wie dargestellt - an einem mittleren Segment 7b des Deckelteils 7 mit dem Bodenteil 6 verbunden, wobei das Deckelteil 7 und das Bodenteil 6 vorzugsweise einstückig ausgebildet sind. Das Deckelteil 7 ist dadurch vorteilhafterweise am Bodenteil 6 unverlierbar gehalten und kann zusammen mit diesem als ein einziges Gehäusebauteil hergestellt werden. Außerdem erhöht sich gegenüber einer zweiteiligen Ausführung, die ebenfalls möglich ist, ohne weitere Maßnahmen die Dichtheit des Gehäuses 5 im Bereich des Filmscharniers.

Zum separaten Verschließen der Ausnehmungen im Bodenteil und Bildung der Durchführungsöffnungen 8, 9, 10 des Gehäuses 5 für die elektrischen Leitungen 2, 3, 4 ist vorgesehen, dass am Bodenteil 6 und am Deckelteil 7 des Gehäuses 5 einander komplementäre Rastelemente zur gegenseitigen Verrastung der beiden miteinander verbindbaren Gehäuseteile 6, 7 angeordnet sind. Die Rastelemente am Bodenteil 6, bei denen es sich bevorzugt um Öffnungen in der Gehäusewand handelt, sind einheitlich mit dem Bezugszeichen 24, die Rastelemente am Deckelteil 7, bei denen es sich bevorzugt um Rasthaken an jedem der Segmente 7a, 7b, 7c handelt, sind einheitlich mit dem Bezugszeichen 25 bezeichnet. Die Rastelemente 24, 25 gewährleisten eine einfache Verschließbarkeit und eine einfache Möglichkeit zum Öffnen des Gehäuses 5 und können unmittelbar bei der Herstellung des Gehäuses 5 als einstückig angeformte Haken 25 oder eingeformte Öffnungen 24 in aufwandsarmer Weise gefertigt werden.

Im Sinne eines einfach vorzunehmenden Leitungsanschlusses gestattet es die erfindungsgemäße Verteilerbox 1 vorteilhafterweise, die Anschlussstellen 12, 13, 14, 15, 16, 17 des Kontaktkörpers 11 als schraubenlose Systeme, wie Klemm-, Schneid-, oder Steckkontaktsysteme, auszubilden. So können die Leiter 18, 19, 20, 21, 22, 23 der anzuschließenden elektrischen Leitungen 2, 3, 4 durch Eindrücken automatisch am Kontaktkörper 11 kontaktiert werden.

Werden dabei, wie in Fig. 1, 2 und 4 dargestellt, Schneidkontaktsysteme eingesetzt, so ist es auch möglich, die Leitungen 2, 3, 4 oder deren Isolation vorher zu durchtrennen.

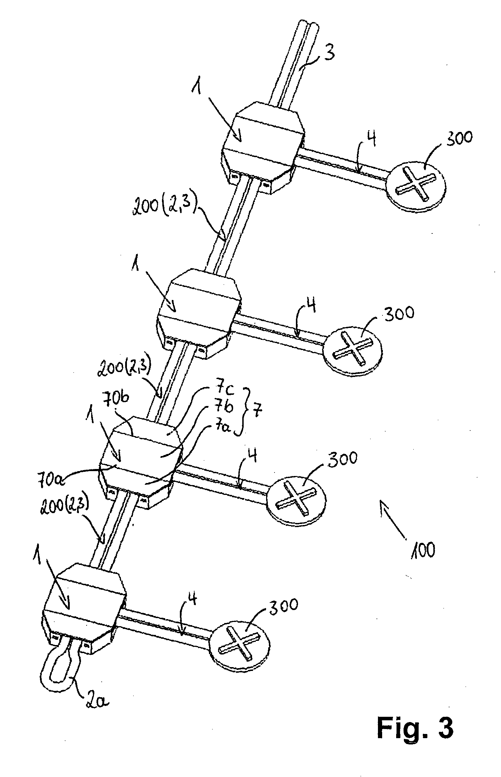

Wie die in Fig. 3 gezeigte Darstellung eines erfindungsgemäßen elektrischen Verteilersystems 100 veranschaulicht, entsteht ein solches dadurch, dass mindestens zwei erfindungsgemäße Verteilerboxen 1 untereinander durch mindestens eine elektrische Verbindungsleitung 200 verbunden werden. Als Verbindungsleitungen 200 können dabei die in Fig. 1 sowie 4 bis 6 jeweils mit den Bezugszeichen 2 und 3 bezeichneten Leitungen auftreten, während an die mit dem Bezugszeichen 4 bezeichnete elektrische Leitung jeweils ein elektrischer Verbraucher 300 angeschlossen ist. Hierbei kann es sich bevorzugt um High-Power-LEDs handeln, die zu ihrem Betrieb Konstantstrom benötigen. Die erfindungsgemäße Verteilerbox 1 kann dabei die elektrischen Verbindungen zwischen einer Zuleitung 3, den Verbrauchern 300 und einer weiterführenden elektrischen Leitung 2 bzw. auch einer vorgeschalteten Elektronik herstellen. Dabei kann insbesondere vorgesehen sein, dass die Anschlussstellen 12, 13, 14, 15, 16, 17 die elektrisch leitenden Kontaktkörper 11 in den Verteilerboxen 1 derart konfiguriert sind, dass in einer elektrischen Schaltung mit einer Zuleitung und mit mindestens zwei Verbrauchern die Verbraucher seriell geschaltet sind.

Hierbei kann auch vorgesehen sein, dass zwei Anschlussstellen 12, 13, 14, 15, 16, 17 des Kontaktkörpers 11 für zwei Leiter 18, 19, 20, 21, 22, 23 mindestens einer elektrischen Leitung 2, 3, 4 mittels einer in eine Verteilerbox 1 integrierten oder angeschlossenen umlegbaren Leiterbrücke 2a elektrisch abgeschlossen sind, wie dies Fig. 3 zeigt.

Ob eine serielle Schaltung tatsächlich vorliegt, ist Fig. 3 als solcher nicht zu entnehmen, allerdings ist dies der Fall, wenn die Kontaktkörper 11 der zur Herstellung der Schaltung eingesetzten Verteilerboxen 1 derart konfiguriert sind, wie dies Fig. 1 sowie Fig. 4 bis 6 zeigen. Es ist dort zu erkennen, dass die Kontaktkörper 11 mehrteilig, im vorliegenden Fall dreiteilig, ausgeführt sind, wobei die einzelnen Teile 11a, 11b, 11c durch Isolationsstege 27a, 27b, 27c voneinander getrennt sind. Die Isolationsstege 27a, 27b, 27c sind dabei in montagefreundlicher Ausführung Bestandteil eines einzigen Isolationskörpers 27.

Der erste Teil 11a des Kontaktkörpers 11 verbindet einen ersten Leiter 18 der ersten Leitung 2 und einen ersten Leiter 20 der zweiten Leitung 3. Der zweite Teil 11 b des Kontaktkörpers 11 verbindet einen zweiten Leiter 19 der ersten Leitung 2 und einen ersten Leiter 22 der dritten Leitung 4. Der dritte Teil 11 c des Kontaktkörpers 11 verbindet einen zweiten Leiter 23 der dritten Leitung 4 und einen zweiten Leiter 21 der zweiten Leitung 3. Der erste Teil 11 a und der zweite Teil 11 b des Kontaktkörpers 11 sind voneinander durch den ersten Isolationssteg 27a getrennt. Der erste Teil 11a und der dritte Teil 11c des Kontaktkörpers 11 sind voneinander durch den zweiten Isolationssteg 27b getrennt. Der zweite Teil 11 b und der dritte Teil 11 c des Kontaktkörpers 11 sind voneinander durch den dritten Isolationssteg 27c getrennt. Den Leitern 18, 19, 20, 21, 22, 23 sind dabei ihre jeweiligen Kontaktstellen 12, 13, 14, 15, 16, 17 zugeordnet, an die die Teile 11a, 11b, 11c des Kontaktkörpers elektrisch angebunden sind.

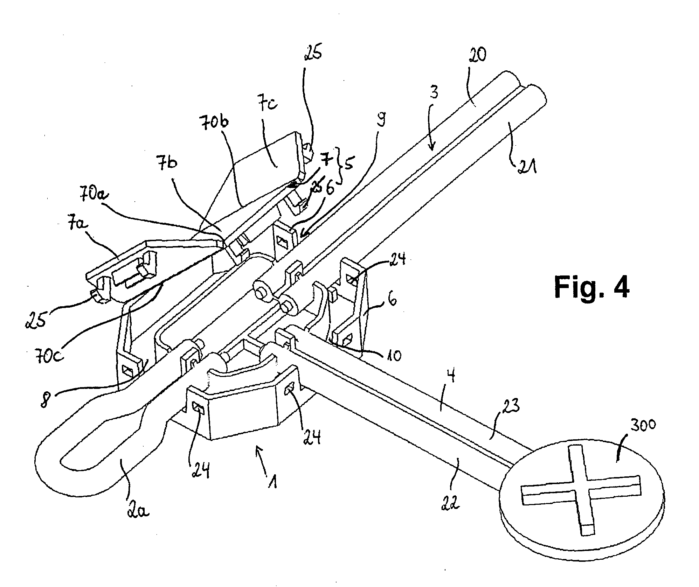

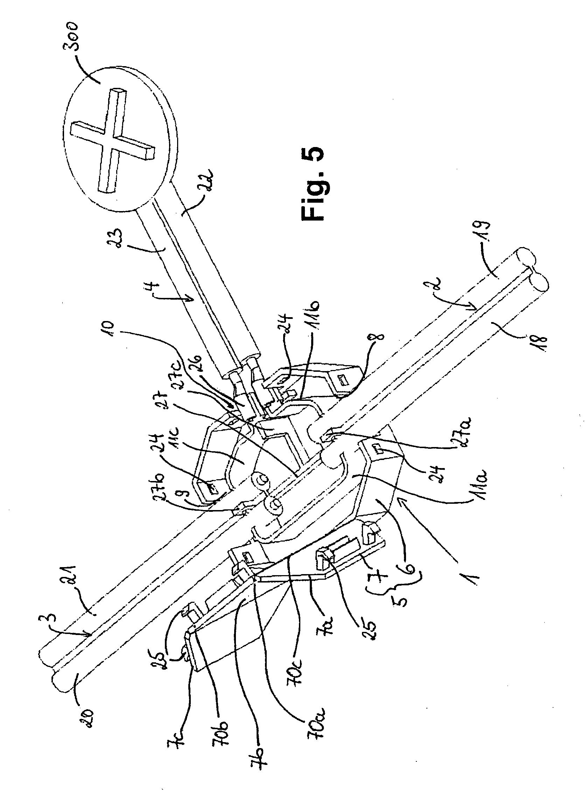

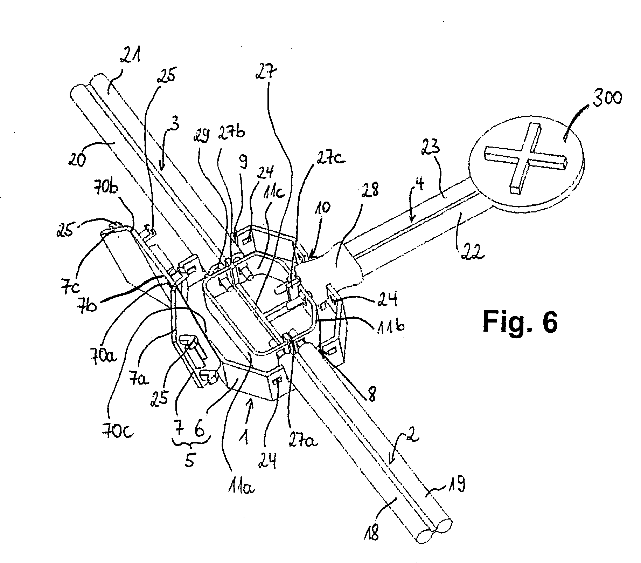

Die in Fig. 5 dargestellte zweite Ausführung und die in Fig. 6 dargestellte dritte Ausführung einer erfindungsgemäßen Verteilerbox 1 unterscheiden sich von der ersten Ausführung dadurch, wie die Anschlussstellen 12, 13, 14, 15, 16, 17 des Kontaktkörpers 11 durch die Leiter 18, 19, 20, 21, 22, 23 der anzuschließenden elektrischen Leitungen 2, 3, 4 kontaktiert werden. Bei allen Ausführungen handelt es sich übereinstimmend um schraubenlose Systeme, in denen die Leiter 18, 19, 20, 21, 22, 23 durch Eindrücken automatisch kontaktiert werden, jedoch ist in Fig. 1 und 4 ein Schneidsystem, in Fig. 5 für die Leiter 22, 23 der zum Verbraucher 300 führenden Leitung 4 ein System mit einem Anschluss über Flachstecker 26 an jedem Leiter 22 23 und in Fig. 6 für die gleiche Leitung 4 ein System mit einem vorkonfektionierten Stecker 28 sowie für die Leiter 18, 19, 20, 21 der beiden übrigen Leitungen 2, 3 dieser Ausführung ein Steckklemmsystem 29 vorgesehen, bei dem die abisolierten Leiterenden in Federkontakte eingesteckt werden. Das Lösen dieser Kontakte erfolgt dann durch ein gleichzeitiges Ziehen und Drehen des Leiters 18, 19, 20,21.

Die Erfindung ist nicht auf die dargestellten Ausführungsbeispiele beschränkt, sondern umfasst auch alle im Sinne der Erfindung gleichwirkenden Ausführungen. So könnte beispielsweise das Gehäuse 5 auch mit dreieckigem Grundriss mit jeweils um 120 ° zueinander versetzten Durchführungsöffungen 8, 9, 10 ausgeführt werden. Auch eine kugelförmige Gehäuseausführung ist möglich, ohne dass der Rahmen der Erfindung verlassen wird. Für die Kontaktierung der Leiter 18, 19, 20, 21, 22, 23 der anzuschließenden Leitungen im Kontaktblock 11 können auch Schraubklemmen, z. B. solche mit einem Piercing, wie sie in der Fachwelt bekannt sind, eingesetzt werden.

Des Weiteren kann der Fachmann zusätzliche zweckmäßige technische Maßnahmen vorsehen, ohne dass der Rahmen der Erfindung verlassen wird. So können beispielsweise zur flexiblen Anpassung der erfindungsgemäßen Verteilerbox 1 an verschiedene herzustellende elektrische Schaltungen (Parallelschaltung, Gruppenschaltung) für den elektrisch leitenden Kontaktkörper 11 elektrische Brückenelemente, wie Um- oder Drehschalter, umlegbare Kontaktlaschen, Jumper, Steckbrückenteile o. ä. vorgesehen sein, durch die die Polarität einer oder mehrerer Anschlussstellen 12, 13, 14, 15, 16, 17 veränderbar ist. Dadurch können die Strompfade durch die erfindungsgemäße Verteilerbox 1 in gewünschter Weise konfiguriert werden.

Des Weiteren kann mit Vorteil vorgesehen sein, dass mit dem elektrisch leitenden Kontaktkörper 11 die Polarität der Anschlussstellen 12, 13, 14, 15, 16, 17 anzeigende Elemente, wie Leuchtdioden, verbunden sind.

In das Gehäuse 5 kann mindestens ein elektrischer oder elektronischer Bypass, wie eine Diode, integriert sein, der bei einem Defekt eines angeschlossenen Verbrauchers, wie eines LED-Leuchtmittels, den durch den Verbraucher verlaufenden Strompfad überbrückt. Auf diese Weise kann vermieden werden, dass bei Ausfall eines Verbrauchers sofort der gesamte Stromkreis ausfällt.

Außerdem ist es auch möglich, in das Gehäuse 5 zugentlastende Vorrichtungen für die anzuschließenden elektrischen Leitungen 2, 3, 4 zu integrieren.

Zur Erhöhung des Schutzgrades der erfindungsgemäßen Verteilerbox 1 kann vorgesehen sein, dass die Leiter 18, 19, 20, 21, 22, 23 der anzuschließenden elektrischen Leitungen 2, 3, 4 im Gehäuse 5, zumindest an ihren Anschlussstellen 12, 13, 14, 15, 16, 17, wasserdicht gekapselt sind, wobei vorzugsweise zumindest das Bodenteil 6 des Gehäuses 5 mit einer Isoliermasse ausgegossen ist.

### Bezugszeichenliste

- 1: Verteilerbox
- 2: erste elektrische Leitung
- 2a: Leiterbrücke anstelle von 2
- 3: zweite elektrische Leitung
- 4: dritte elektrische Leitung (zu 300)
- 5: Gehäuse von 1
- 6: Bodenteil von 5
- 7: Deckelteil von 5
- 7a: erstes Segment von 7
- 7b: zweites Segment von 7
- 7c: drittes Segment von 7
- 8: Durchführungsöffnung in 5 für 2
- 9: Durchführungsöffnung in 5 für 3
- 10: Durchführungsöffnung in 5 für 4
- 11: Kontaktkörper von 1
- 11a: erster Teil von 11
- 11b: zweiter Teil von 11
- 11c: dritter Teil von 11
- 12: Anschlussstelle von 11 für 18
- 13: Anschlussstelle von 11 für 19
- 14: Anschlussstelle von 11 für 20
- 15: Anschlussstelle von 11 für 21
- 16: Anschlussstelle von 11 für 22
- 17: Anschlussstelle von 11 für 23
- 18: erster Leiter von 2
- 19: zweiter Leiter von 2
- 20: erster Leiter von 2
- 21: erster Leiter von 3
- 22: zweiter Leiter von 3
- 23: erster Leiter von 4
- 24: zweiter Leiter von 4
- 24: Rastelement an 6 (Öffnung)
- 25: Rastelement an 7 (Haken)
- 26: Flachstecker (Fig. 5)
- 27: Isolationskörper
- 27a: erster Isolationssteg von 27
- 27b: zweiter Isolationssteg von 27
- 27c: dritter Isolationssteg von 27
- 28: Stecker an 4 (Fig. 6)
- 29: Steckklemmsystem (Fig. 6)

- 70a: Scharnier zwischen 7a und 7b
- 70b: Scharnier zwischen 7c und 7b
- 70c: Scharnier zwischen 7 (7b) und 6

- 100: Verteilersystem
- 200: Verbindungsleitung (allgemein)
- 300: Verbraucher

## Patentansprüche

1. Verteilerbox (1) für elektrische Leitungen (2, 3, 4), mit einem aus einem Isolationsstoff bestehenden Gehäuse (5), welches eingangs- und ausgangsseitig Durchführungsöffnungen (8, 9, 10) für die elektrischen Leitungen (2, 3, 4) aufweist, umfassend zwei miteinander verbindbare Gehäuseteile (6, 7), und zwar ein Bodenteil (6) und ein Deckelteil (7), und mit einem im Gehäuse (5) angeordneten, elektrisch leitenden Kontaktkörper (11) mit Anschlussstellen (12, 13, 14, 15, 16, 17) für die Leiter (18, 19, 20, 21, 22, 23) der elektrischen Leitungen (2, 3, 4),
wobei die Durchführungsöffnungen (8, 9, 10) in zumindest einem der Gehäuseteile (6, 7) angeordnet sind und als jeweils durch das andere Gehäuseteil (7, 6) verschließbare randoffene Ausnehmungen der Wandung des Gehäuseteils (6, 7) ausgeführt sind,
**dadurch gekennzeichnet, dass** das Deckelteil (7) aus miteinander verbundenen Segmenten (7, 7b, 7c) besteht, mittels derer die randoffenen Ausnehmungen im Bodenteil (6) separat verschließbar sind, wobei die Segmente (7a, 7b, 7c) des Deckelteils (7) über Filmscharniere (70a, 70b) miteinander verbunden sind, wobei das Deckelteil (7) vorzugsweise einstückig ausgebildet ist.

2. Verteilerbox (1) nach Anspruch 1,
**dadurch gekennzeichnet, dass** alle Durchführungsöffnungen (8, 9, 10) im Bodenteil (6) des Gehäuses (5) angeordnet und mittels des Deckelteils (7) verschließbar sind.

3. Verteilerbox (1) nach einem der Ansprüche 1 oder 2,
**dadurch gekennzeichnet, dass** das Deckelteil (7) über ein Scharnier (70c), insbesondere über ein Filmscharnier, mit dem Bodenteil (6) verbunden ist, wobei das Deckelteil (7) und das Bodenteil (6) vorzugsweise einstückig miteinander ausgebildet sind.

4. Verteilerbox (1) nach einem der Ansprüche 1 bis 3,
**dadurch gekennzeichnet, dass** am Bodenteil (6) und am Deckelteil (7) des Gehäuses (5) Rastelemente (24, 25) zur gegenseitigen Verrastung der beiden miteinander verbindbaren Gehäuseteile (6, 7) angeordnet sind.

5. Verteilerbox (1) nach den Ansprüchen 1 und 4,
**dadurch gekennzeichnet, dass** an jedem Segment (7, 7b, 7c) des Deckelteils (7) Rastelemente (25) angeordnet sind.

6. Verteilerbox (1) nach einem der Ansprüche 1 bis 5,
**dadurch gekennzeichnet, dass** im Gehäuse (5) mindestens drei, vorzugsweise drei, Durchführungsöffnungen (8, 9, 10) für die anzuschließenden elektrischen Leitungen (2,3,4) vorgesehen sind.

7. Verteilerbox (1) nach einem der Ansprüche 1 bis 6,
**dadurch gekennzeichnet, dass** das Gehäuse (5) eine parallelepipedrische Grundgestalt, vorzugsweise eine quaderförmige Grundgestalt, aufweist.

8. Verteilerbox (1) nach den Ansprüchen 6 und 7,
**dadurch gekennzeichnet, dass** in dem Gehäuse (5) jeweils eine Durchführungsöffnung (8) an einer Stirnseite, eine weitere Durchführungsöffnung (9) an der gegenüberliegenden Stirnseite und eine dritte Durchführungsöffnung (10) an einer Längsseite des Bodenteils (6) angeordnet ist.

9. Verteilerbox (1) nach einem der Ansprüche 1 bis 8,
**dadurch gekennzeichnet, dass** die Anschlussstellen (12, 13, 14, 15, 16, 17) des Kontaktkörpers (11) als schraubenlose Systeme, wie Klemm-, Schneid-, oder Steckkontaktsysteme, ausgebildet sind, mittels derer die Leiter (18, 19, 20, 21, 22, 23) der anzuschließenden elektrischen Leitungen (2, 3, 4) durch Eindrücken automatisch kontaktiert und die Leitungen (2, 3, 4) oder deren Isolierung vorzugsweise vorher durchtrennt werden.

10. Verteilerbox (1) nach einem der Ansprüche 1 bis 9,
**dadurch gekennzeichnet, dass** die Leiter (18, 19, 20, 21, 22, 23) der anzuschließenden elektrischen Leitungen (2, 3, 4) im Gehäuse (5), zumindest an ihren Anschlussstellen (12, 13, 14, 15, 16, 17), wasserdicht gekapselt sind, wobei vorzugsweise zumindest das Bodenteil (6) des Gehäuses (5) mit einer Isoliermasse ausgegossen ist.

11. Verteilerbox (1) nach einem der Ansprüche 1 bis 10,
**dadurch gekennzeichnet, dass** mit dem elektrisch leitenden Kontaktkörper (11) die Polarität der Anschlussstellen (12, 13, 14, 15, 16, 17) anzeigende Elemente, wie Leuchtdioden, verbunden sind.

12. Verteilerbox (1) nach einem der Ansprüche 1 bis 11,
**dadurch gekennzeichnet, dass** in das Gehäuse (5) zugentlastende Vorrichtungen für die anzuschließenden elektrischen Leitungen (2, 3, 4) integriert sind.

13. Verteilerbox (1) nach einem der Ansprüche 1 bis 12,
**dadurch gekennzeichnet, dass** in das Gehäuse (5) mindestens ein elektrischer oder elektronischer Bypass, wie eine Diode, integriert ist, der bei einem Defekt eines angeschlossenen Verbrauchers, wie eines LED-Leuchtmittels, den durch den Verbraucher verlaufenden Strompfad überbrückt.

14. Verteilerbox (1) nach einem der Ansprüche 1 bis 13,
**dadurch gekennzeichnet, dass** der elektrisch leitende Kontaktkörper (11) mehrteilig ausgebildet ist.

15. Verteilerbox (1) nach Anspruch 14,
**dadurch gekennzeichnet, dass** die einzelnen Teile (11a, 11b, 11c) des Kontaktkörpers (11) durch Isolationsstege (27a, 27b, 27c) voneinander getrennt sind.

16. Verteilerbox (1) nach Anspruch 15,
**dadurch gekennzeichnet, dass** die Isolationsstege (27a, 27b, 27c) dabei Bestandteil eines einzigen Isolationskörpers (27) sind.

17. Verteilerbox (1) nach einem der Ansprüche 1 bis 16,
**dadurch gekennzeichnet, dass** elektrische Brückenelemente, wie Um- oder Drehschalter, umlegbare Kontaktlaschen, Jumper, Steckbrückenteile o. ä. vorgesehen sind, durch die die Polarität einer oder mehrerer Anschlussstellen (12, 13, 14, 15, 16, 17) veränderbar ist.

18. Verteilerbox (1) nach einem der Ansprüche 1 bis 17,
**dadurch gekennzeichnet, dass** der Kontaktkörper (11) dreiteilig aufgebaut ist, wobei ein erster Teil (11a) des Kontaktkörpers (11) eine Anschlussstelle (12) für einen ersten Leiter (18) einer ersten Leitung (2) und eine Anschlussstelle (14) für einen ersten Leiter (20) einer zweiten Leitung (3) verbindet, ein zweiter Teil (11 b) des Kontaktkörpers (11) eine Anschlussstelle (13) für einen zweiten Leiter (19) der ersten Leitung (2) und eine Anschlussstelle (16) für einen ersten Leiter (22) einer dritten Leitung (4) verbindet, und der dritte Teil (11 c) des Kontaktkörpers (11) eine Anschlussstelle (17) für einen zweiten Leiter (23) der dritten Leitung (4) und eine Anschlussstelle (15) für einen zweiten Leiter (21) der zweiten Leitung (3) verbindet, und wobei jeweils der erste Teil (11a) und der zweite Teil (11 b) des Kontaktkörpers (11) voneinander durch einen ersten Isolationssteg (27a), der erste Teil (11a) und der dritte Teil (11c) des Kontaktkörpers (11) voneinander durch einen zweiten Isolationssteg (27b) sowie der zweite Teil (11b) und der dritte Teil (11c) des Kontaktkörpers (11) voneinander durch einen dritten Isolationssteg (27c) getrennt sind.

19. Elektrisches Verteilersystem mit mindestens zwei Verteilerboxen (1) nach einem der Ansprüche 1 bis 18, die untereinander durch mindestens eine elektrische Leitung (2, 3) verbunden sind.

20. Elektrisches Verteilersystem nach Anspruch19,
**dadurch gekennzeichnet, dass** die Anschlussstellen (12, 13, 14, 15, 16, 17) der elektrisch leitenden Kontaktkörper (11) in den Verteilerboxen (1) derart konfiguriert sind, dass in einer elektrischen Schaltung mit einer Zuleitung (3) und mit mindestens zwei Verbrauchern (300), die Verbraucher (300) seriell geschaltet sind.

21. Elektrisches Verteilersystem nach Anspruch 19 oder 20,
**dadurch gekennzeichnet, dass** zwei Anschlussstellen (12, 13, 14, 15, 16, 17) für die Leiter (18, 19, 20, 21, 22, 23) mindestens einer elektrischen Leitung (2, 3, 4) mittels einer in eine Verteilerbox (1) integrierten oder angeschlossenen umlegbaren Leiterbrücke (2a) elektrisch abgeschlossen sind.

## Claims

1. Distributor box (1) for electrical lines (2, 3, 4), having a housing (5) composed of an insulating material, which housing has, on the input and output sides, passage openings (8, 9, 10) for the electrical lines (2, 3, 4), comprising two housing parts (6, 7) which are connectable to one another, to be more precise a bottom part (6) and a cover part (7), and having an electrically conductive contact body (11) which is arranged in the housing (5) and has connection points (12, 13, 14, 15, 16, 17) for the conductors (18, 19, 20, 21, 22, 23) of the electrical lines (2, 3, 4), wherein the passage openings (8, 9, 10) are arranged in at least one of the housing parts (6, 7) and are designed as recesses in the wall of the housing part (6, 7) which are open at the edge and can each be closed off by the other housing part (7, 6),
**characterized in that** the cover part (7) consists of segments (7, 7b, 7c) which are connected to one another and by means of which the recesses which are open at the edge in the bottom part (6) can be separately closed off, wherein the segments (7a, 7b, 7c) of the cover part (7) are connected to one another via living hinges (70a, 70b), wherein the cover part (7) is preferably designed in one piece.

2. Distributor box (1) according to Claim 1,
**characterized in that** all of the passage openings (8, 9, 10) are arranged in the bottom part (6) of the housing (5) and can be closed off by means of the cover part (7).

3. Distributor box (1) according to either of Claims 1 and 2,
**characterized in that** the cover part (7) is connected to the bottom part (6) via a hinge (70c), in particular via a living hinge, wherein the cover part (7) and the bottom part (6) are preferably formed together in one piece.

4. Distributor box (1) according to any of Claims 1 to 3,
**characterized in that** latching elements (24, 25) for mutual latching of the two housing parts (6, 7) which are connectable to one another are arranged on the bottom part (6) and the cover part (7) of the housing (5).

5. Distributor box (1) according to Claims 1 and 4,
**characterized in that** latching elements (25) are arranged on each segment (7, 7b, 7c) of the cover part (7).

6. Distributor box (1) according to any of Claims 1 to 5,
**characterized in that** at least three, preferably three, passage openings (8, 9, 10) for the electrical lines (2, 3, 4) to be connected are provided in the housing (5).

7. Distributor box (1) according to any of Claims 1 to 6,
**characterized in that** the housing (5) has a parallelepipedal basic shape, preferably a cuboid basic shape.

8. Distributor box (1) according to Claims 6 and 7,
**characterized in that**, in the housing (5), in each case a passage opening (8) is arranged at an end face, another passage opening (9) is arranged at the opposite end face and a third passage opening (10) is arranged on a longitudinal side of the bottom part (6).

9. Distributor box (1) according to any of Claims 1 to 8,
**characterized in that** the connection points (12, 13, 14, 15, 16, 17) of the contact body (11) are designed as screwless systems, such as clamping contact systems, insulation displacement contact systems or plug-in contact systems, by means of which contact is automatically made by impression with the conductors (18, 19, 20, 21, 22, 23) of the electrical lines (2, 3, 4) to be connected and the lines (2, 3, 4) or the insulation thereof are preferably previously cut.

10. Distributor box (1) according to any of Claims 1 to 9,
**characterized in that** the conductors (18, 19, 20, 21, 22, 23) of the electrical lines (2, 3, 4) to be connected are encapsulated in a water-tight fashion in the housing (5), at least at the connection points (12, 13, 14, 15, 16, 17) of said conductors, wherein at least the bottom part (6) of the housing (5) is preferably grouted with an insulating compound.

11. Distributor box (1) according to any of Claims 1 to 10,
**characterized in that** elements, such as light-emitting diodes, which indicate the polarity of the connection points (12, 13, 14, 15, 16, 17) are connected to the electrically conductive contact body (11).

12. Distributor box (1) according to any of Claims 1 to 11,
**characterized in that** strain-relieving devices for the electrical lines (2, 3, 4) to be connected are integrated in the housing (5).

13. Distributor box (1) according to any of Claims 1 to 12,
**characterized in that** at least one electrical or electronic bypass, such as a diode, is integrated in the housing (5) and bridges the current path running through a connected consumer, such as an LED illuminant, in the event of a fault in the consumer.

14. Distributor box (1) according to any of Claims 1 to 13,
**characterized in that** the electrically conductive contact body (11) is formed in multiple parts.

15. Distributor box (1) according to Claim 14,
**characterized in that** the individual parts (11a, 11b, 11c) of the contact body (11) are insulated from one another by insulation webs (27a, 27b, 27c).

16. Distributor box (1) according to Claim 15,
**characterized in that** the insulation webs (27a, 27b, 27c) are in this case part of a single insulation body (27).

17. Distributor box (1) according to any of Claims 1 to 16,
**characterized in that** electrical bridge elements, such as changeover switches or rotary switches, moveable contact lugs, jumpers, plug-in bridge parts or the like, are provided, by means of which it is possible to change the polarity of one or more connection points (12, 13, 14, 15, 16, 17).

18. Distributor box (1) according to any of Claims 1 to 17,
**characterized in that** the contact body (11) is constructed in three parts, wherein a first part (11a) of the contact body (11) connects a connection point (12) for a first conductor (18) of a first line (2) to a connection point (14) for a first conductor (20) of a second line (3), a second part (11b) of the contact body (11) connects a connection point (13) for a second conductor (19) of the first line (2) to a connection point (16) for a first conductor (22) of a third line (4), and the third part (11c) of the contact body (11) connects a connection point (17) for a second conductor (23) of the third line (4) to a connection point (15) for a second conductor (21) of the second line (3), and wherein in each case the first part (11a) and the second part (11b) of the contact body (11) are insulated from one another by a first insulation web (27a), the first part (11a) and the third part (11c) of the contact body (11) are insulated from one another by a second insulation web (27b) and the second part (11b) and the third part (11c) of the contact body (11) are insulated from one another by a third insulation web (27c).

19. Electrical distribution system having at least two distributor boxes (1) according to any of Claims 1 to 18 which are connected to one another by means of at least one electrical line (2, 3).

20. Electrical distribution system according to Claim 19,
**characterized in that** the connection points (12, 13, 14, 15, 16, 17) of the electrically conductive contact bodies (11) in the distributor boxes (1) are configured such that, in an electrical circuit with a supply line (3) and at least two consumers (300), the consumers (300) are connected in series.

21. Electrical distribution system according to Claim 19 or 20,
**characterized in that** two connection points (12, 13, 14, 15, 16, 17) for the conductors (18, 19, 20, 21, 22, 23) of at least one electrical line (2, 3, 4) are electrically isolated by means of a moveable conductor bridge (2a) integrated or connected in a distributor box (1).

## Revendications

1. Boîte de distribution (1) pour câbles électriques (2, 3, 4),
présentant un boîtier (5) constitué d'un matériau isolant et doté du côté d'entrée et du côté de sortie d'ouvertures (8, 9, 10) permettant le passage des câbles électriques (2, 3, 4), comprenant deux parties de boîtier (6, 7), à savoir une partie de fond (6) et une partie de couvercle (7), aptes à être raccordées l'une à l'autre et un corps de contact (11) électriquement conducteur disposé dans le boîtier (5) et doté d'emplacements de raccordement (12, 13, 14, 15, 16, 17) pour les conducteurs (18, 19, 20, 21, 22, 23) des câbles électriques (2, 3, 4),
les ouvertures de passage (8, 9, 10) étant disposées dans au moins l'une des parties du boîtier (6, 7) et étant réalisées chacune comme découpe à bord ouvert de la paroi de la partie de boîtier (6, 7), apte à être refermée par l'autre partie de boîtier (7, 6), **caractérisée en ce que**
la partie de couvercle (7) est constituée de segments (7, 7b, 7c) raccordés les uns aux autres au moyen desquels les découpes à bord ouvert dans la partie de fond (6) peuvent être fermées séparément,
**en ce que** les segments (7a, 7b, 7c) de la partie de couvercle (7) sont raccordés les uns aux autres par des charnières en film (70a, 70b), la partie de couvercle (7) étant réalisée de préférence d'un seul tenant.

2. Boîte de distribution (1) selon la revendication 1, **caractérisée en ce que** toutes les ouvertures de passage (8, 9, 10) sont ménagées dans la partie de fond (6) du boîtier (5) et peuvent être fermées au moyen de la partie de couvercle (7).

3. Boîte de distribution (1) selon l'une des revendications 1 et 2, **caractérisée en ce que** la partie de couvercle (7) est raccordée à la partie de fond (6) par une charnière (70c), en particulier une charnière en film, la partie de couvercle (7) et la partie de fond (6) étant réalisées de préférence l'une avec l'autre d'un seul tenant.

4. Boîte de distribution (1) selon l'une des revendications 1 à 3, **caractérisée en ce que** des éléments d'encliquetage (24, 25) qui permettent d'encliqueter mutuellement les deux parties de boîtier (6, 7) aptes à être raccordées l'une à l'autre sont disposés sur la partie de fond (6) et la partie de couvercle (7) du boîtier (5).

5. Boîte de distribution (1) selon les revendications 1 et 4, **caractérisée en ce que** des éléments d'encliquetage (25) sont disposés sur chaque segment (7, 7b, 7c) de la partie de couvercle (7).

6. Boîte de distribution (1) selon l'une des revendications 1 à 5, **caractérisée en ce qu'**au moins trois et de préférence trois ouvertures de passage (8, 9, 10) sont prévues pour les câbles électriques (2, 3, 4) à raccorder dans le boîtier (5).

7. Boîte de distribution (1) selon l'une des revendications 1 à 6, **caractérisée en ce que** le boîtier (5) présente une forme de base d'un parallélépipède et de préférence la forme de base d'un parallélépipède rectangle.

8. Boîte de distribution (1) selon les revendications 6 et 7, **caractérisée en ce qu'**une ouverture de passage (8) est disposée dans le boîtier (5) sur un côté frontal, une autre ouverture de passage (9) sur le côté frontal opposé et une troisième ouverture de passage (10) sur un côté longitudinal de la partie de fond (6).

9. Boîte de distribution (1) selon l'une des revendications 1 à 8, **caractérisée en ce que** les emplacements de raccordement (12, 13, 14, 15, 16, 17) du corps de contact (11) sont configurés comme systèmes sans vis, par exemple des systèmes de contact à serrage, à découpe ou à fiche au moyen desquels les conducteurs (18, 19, 20, 21, 22, 23) des câbles électriques (2, 3, 4) à raccorder sont mis en contact automatiquement par enfoncement, les câbles (2, 3, 4) ou leur isolation étant de préférence découpés préalablement.

10. Boîte de distribution (1) selon l'une des revendications 1 à 9, **caractérisée en ce que** les conducteurs (18, 19, 20, 21, 22, 23) des câbles électriques (2, 3, 4) à raccorder sont encapsulés de manière étanche dans le boîtier (5), au moins en leurs emplacements de raccordement (12, 13, 14, 15, 16, 17), de préférence au moins la partie de fond (6) du boîtier (5) étant remplie d'une masse isolante.

11. Boîte de distribution (1) selon l'une des revendications 1 à 10, **caractérisée en ce que** des éléments qui affichent la polarité des emplacements de raccordement (12, 13, 14, 15, 16, 17), par exemple des diodes luminescentes, sont raccordés au corps de contact (11) électriquement conducteur.

12. Boîte de distribution (1) selon l'une des revendications 1 à 11, **caractérisée en ce que** des dispositifs de délestage de traction prévus pour les câbles électriques (2, 3, 4) à raccorder sont intégrés dans le boîtier (5).

13. Boîte de distribution (1) selon l'une des revendications 1 à 12, **caractérisée en ce qu'**au moins une dérivation électrique ou électronique, par exemple une diode, est intégrée dans le boîtier (5) et ponte le parcours de courant qui traverse le consommateur en cas de défaut d'un consommateur raccordé, par exemple un moyen d'éclairage à LED.

14. Boîte de distribution (1) selon l'une des revendications 1 à 13, **caractérisée en ce que** le corps de contact (11) électriquement conducteur est réalisé en plusieurs pièces.

15. Boîte de distribution (1) selon la revendication 14, **caractérisée en ce que** les différentes parties (11a, 11b, 11c) du corps de contact (11) sont séparées les unes des autres par des traverses isolantes (27a, 27b, 27c).

16. Boîte de distribution (1) selon la revendication 15, **caractérisée en ce que** les traverses isolantes (27a, 27b, 27c) font partie d'un unique corps isolant (27).

17. Boîte de distribution (1) selon l'une des revendications 1 à 16, **caractérisée en ce que** des éléments électriques de pontage, par exemple des commutateurs à bascule ou à rotation, des pattes de contact déplaçables, des étriers de pontage, des pièces de pontage par enfichage, entre autres, sont prévus, et permettent de modifier la polarité d'un ou de plusieurs emplacements de contact (12, 13, 14, 15, 16, 17).

18. Boîte de distribution (1) selon l'une des revendications 1 à 17, **caractérisée en ce que** le corps de contact (11) est réalisé en trois parties, une première partie (11a) du corps de contact (11) reliant un emplacement de raccordement (12) prévu pour un premier conducteur (18) d'un premier câble (2) et un emplacement de raccordement (14) prévu pour un premier conducteur (20) d'un deuxième câble (3), une deuxième partie (11b) du corps de contact (11) reliant un emplacement de contact (13) prévu pour un deuxième conducteur (19) du premier câble (2) et un emplacement de contact (16) prévu pour un deuxième conducteur (22) d'un troisième câble (4), la troisième partie (11c) du corps de contact (11) reliant un emplacement de contact (17) prévu pour un deuxième conducteur (23) du troisième câble (4) et un emplacement de raccordement (15) prévu pour un deuxième conducteur (21) du deuxième câble (3), la première partie (11a) et la deuxième partie (11b) du corps de contact (11) étant séparées l'une de l'autre par une première traverse isolante (27a), la première partie (11a) et la troisième partie (11c) du corps de contact (11) étant séparées l'une de l'autre par une deuxième traverse isolante (27b) et la deuxième partie (11b) et la troisième partie (11c) du corps de contact (11) étant séparées l'une de l'autre par une troisième traverse isolante (27c).

19. Système électrique de distribution présentant au moins deux boîtes de distribution (1) selon l'une des revendications 1 à 18, raccordées l'une à l'autre par au moins un câble électrique (2, 3).

20. Système électrique de distribution selon la revendication 19, **caractérisé en ce que** les emplacements de raccordement (12, 13, 14, 15, 16, 17) des corps de contact (11) électriquement conducteurs prévus dans les boîtes de distribution (1) sont configurés de telle sorte que les consommateurs (300) soient raccordés en série dans un circuit électrique doté d'un conducteur d'amenée (3) et d'au moins deux consommateurs (300).

21. Système électrique de distribution selon les revendications 19 ou 20, **caractérisé en ce que** deux emplacements de contact (12, 13, 14, 15, 16, 17) prévus pour les conducteurs (18, 19, 20, 21, 22, 23) d'au moins un câble électrique (2, 3, 4) sont séparés électriquement les uns des autres au moyen d'un pont conducteur (2a) intégré ou raccordé dans la boîte de répartition (1) et aptes à être contourné.
